# FASCICULE DE BREVET EUROPEEN

(11) **EP 3 077 635 B1**
(45) Date de publication et mention de la délivrance du brevet: **04.10.2017**
(21) Numéro de dépôt: 14821779.7
(22) Date de dépôt: 02.12.2014
(51) Int. Cl.: F01N 3/20, F01N 3/28, B67D 7/02, B67D 7/42

(54) **SYSTÈME DE STOCKAGE PERFECTIONNÉ D'UN ADDITIF LIQUIDE**
VERBESSERTES SYSTEM ZUM LAGERN EINES FLÜSSIGEN ADDITIVS
IMPROVED SYSTEM FOR STORING A LIQUID ADDITIVE

(30) Priorité: 02.12.2013 FR 1361953
(43) Date de publication de la demande: 12.10.2016
(73) Titulaire: Inergy Automotive Systems Research (Société Anonyme), 1120 Brussels (BE)
(72) Inventeur: MANGEOL, Nicolas, 75018 Paris (FR); GUIGNERY, Frédéric, F-95540 Mery-sur-Oise (FR); GEORIS, Philippe, F-60350 Chelles (FR)
(74) Mandataire: Remy, Vincent Noel Paul
(86) Numéro de dépôt international: PCT/FR2014/053125
(87) Numéro de publication internationale: WO 2015/082827

(56) Documents cités:
- WO-A1-2012/107315
- FR-A1- 2 821 801
- GB-A- 2 254 846
- US-A1- 2013 306 665

## Description

La présente invention concerne un système de stockage pour un agent liquide de réduction d'oxydes d'azotes (typiquement appelés NOx) à l'échappement d'un moteur à combustion interne d'un véhicule. De tels agents liquides, par exemple une solution d'urée, sont typiquement injectés en amont de l'échappement d'un véhicule pour aider à réduire la teneur en NOx à l'échappement. Ce système de stockage fait partie d'un système dit « SCR » (correspondant à l'expression anglaise Selective Catalytic Reduction, qui signifie réduction catalytique sélective) permettant la réduction de la teneur en oxydes d'azote, ou NOx, dans les gaz d'échappement.

On connait déjà dans l'état de la technique un tel système comprenant un réservoir, une tubulure de remplissage de l'agent liquide, et une tubulure de ventilation permettant d'évacuer l'air initialement contenu dans le réservoir au fur et à mesure du remplissage de ce réservoir.

Un système connu est décrit dans US 2013/0306665 A. De plus dans un domaine différent FR 2 821 801 A décrit un système comprenant un réservoir à carburant liquide équipé d'une tubulure de remplissage munie d'un guide pour pistolet d'approvisionnement comportant un dispositif d'étanchéité et un clapet à flotteur. Un problème de ce type de système est que lorsque le niveau liquide atteint le niveau maximum laissant un ciel d'air résiduel, il se produit un accroissement brutal de pression dans le ciel provoquant un rejet externe d'agent liquide expulsé par la ligne de ventilation (phénomène souvent appelé « spitback » en anglais).

De plus, les tubulures de remplissage et de ventilation restent typiquement au moins partiellement remplies d'agent liquide après remplissage, ce qui peut dans certaines conditions conduire à des problèmes de gel.

On connait cependant également un système de stockage comprenant un volume tampon (ou capacité de rétention) disposé au niveau d'une partie intermédiaire de la tubulure de ventilation. Un tel volume tampon (souvent appelé « liquid trap », ce qui signifie « piège à liquide » en anglais), permet d'accueillir le liquide rentrant par la tubulure de ventilation, et de stocker temporairement ce liquide pendant la fin du remplissage du réservoir pour éviter tout rejet vers l'extérieur. Un trou de drainage permet de renvoyer vers le réservoir, après remplissage de ce réservoir, le liquide contenu dans le volume tampon. Un tel système permet donc d'éviter le phénomène de spitback, mais au prix d'un composant supplémentaire (volume tampon) induisant une complexité accrue, des connexions supplémentaires et un coût global de pièces ainsi qu'un coût de montage augmentés. De plus, cette capacité supplémentaire induit des risques et contraintes techniques lié à l'aspect vibrations, qui impliquent de mettre en oeuvre des moyens spécifiques de liaison et de serrage de la capacité sur la structure porteuse du véhicule (châssis ou éléments de structure). Généralement, on utilise un ou plusieurs connecteurs pour relier cette capacité à la tubulure de ventilation. L'utilisation de tels connecteurs peut poser des problèmes d'étanchéité et complexifie le montage.

Un but principal de l'invention est de supprimer ou tout au moins limiter notablement tout ou partie des inconvénients précités.

Dans ce but, un objet de l'invention est un système de stockage d'un additif liquide destiné à être injecté dans des gaz d'échappement d'un moteur à combustion interne d'un véhicule, selon la revendication 1, comprenant entres autres les caractéristiques suivantes:
un réservoir de stockage d'additif comprenant des moyens permettant de fixer un niveau maximum de remplissage du réservoir,
une capacité de rétention d'additif en communication fluidique avec le réservoir, ladite capacité étant configurée pour retenir de l'additif provenant du réservoir,
la capacité de rétention d'additif et le réservoir sont adjacents et comprennent au moins une paroi commune.

La capacité de rétention d'additif en communication fluidique avec le réservoir est typiquement configurée pour réceptionner et retenir de l'additif lors d'une phase finale de remplissage du réservoir, puis à permettre un drainage au moins partiel de l'additif réceptionné vers le réservoir après remplissage du réservoir,
Le terme rétention d'additif s'applique donc typiquement à une rétention temporaire, au moins pour une partie de l'additif réceptionné.

Par ailleurs, le système est typiquement destiné à être installé dans une position déterminée sur le véhicule, permettant la rétention d'additif, et typiquement son drainage ultérieur.

La conception de la capacité avec une paroi commune avec le réservoir permet d'obtenir un système beaucoup plus compact qu'un système conventionnel, plus simple à fabriquer et permettant une économie de matière. Ceci permet en outre d'éviter les vibrations de la capacité, typiquement de volume moindre que celui du réservoir, en la rendant intrinsèquement solidaire du réservoir, l'ensemble réservoir capacité formant une structure unique. La capacité bénéficie des moyens de fixation du réservoir, dont elle augmente la masse, ce qui limite les vibrations et risques de résonance de la capacité sans requérir de moyens propres de fixation et de serrage sur la structure du véhicule.

La paroi commune comprend typiquement un passage configuré pour mettre la capacité en communication fluidique avec le réservoir ce passage pouvant typiquement être formé par un conduit traversant la paroi commune.

Ceci permet de limiter les fuites éventuelles au niveau des jonctions et raccords réservoir/capacité, dans le système de stockage conventionnel. En effet, les fuites autour du passage de communication fluidique ne sont pas des fuites externes, mais des circulations secondaires internes de l'additif liquide.

Ceci permet de réduire en outre le nombre d'éléments de raccordement, la communication entre le réservoir et la capacité étant réalisée par un simple orifice.

Le système est typiquement destiné à être monté dans une position déterminée, et comprend le conduit et des moyens de drainage au moins partiel de la capacité vers le réservoir, via ce conduit et/ou via au moins un orifice de drainage (le système étant considéré dans cette position déterminée).

Le conduit (traversant la paroi commune) comprend avantageusement une première partie s'étendant à l'intérieur de la capacité, cette première partie du conduit comprenant au moins un premier orifice de drainage. Ainsi, le liquide, ou au moins une partie du liquide retenu dans la capacité peut être drainé vers le réservoir.

Avantageusement, le conduit comprend également une deuxième partie s'étendant à l'intérieur du réservoir jusqu'au niveau maximum de remplissage du réservoir.

Cette seconde partie du conduit comprend de préférence au moins un deuxième orifice, d'évacuation de pression (et/ou orifice de ventilation de gaz, évitant la montée en pression du réservoir).

La paroi commune peut aussi comprendre au moins un troisième orifice, de drainage. Ceci peut rendre le drainage plus rapide.

Selon un premier mode de réalisation du système de stockage, le système comprend un embout de remplissage qui débouche dans le réservoir sans traverser la capacité.

Selon un deuxième mode préféré de réalisation du système de stockage, le système comprend un embout de remplissage qui traverse la capacité puis débouche dans le réservoir, et de préférence s'étend vers le bas à l'intérieur du réservoir.

De préférence l'embout de remplissage est venu de matière avec une paroi de la capacité. Ceci permet de fabriquer le réservoir et la capacité en deux parties, l'embout de remplissage (qui requiert une précision géométrique élevée puisqu'il faut réaliser un raccordement étanche avec une tubulure de remplissage) appartenant à une pièce intermédiaire différente du réservoir, de dimensions relativement faibles, et d'éviter de compliquer la conception du moule de fabrication du réservoir, pièce principale, comme il sera précisé ci-après.

Selon une variante de réalisation de ce deuxième mode de réalisation, l'embout de remplissage du réservoir passe dans un quatrième orifice aménagé dans la paroi commune, délimitant entre cet embout de remplissage et un bord de ce quatrième orifice un espace de communication fluidique entre le réservoir et la capacité. Ceci permet aussi de simplifier la conception du moule de fabrication du réservoir, comme il sera précisé ci-après.

De façon générale, l'embout de remplissage (optionnellement en deux parties avec un raccord) débouche dans le réservoir et de préférence s'étend vers le bas à l'intérieur du réservoir, de préférence jusqu'à un niveau inférieur au niveau maximum de remplissage. Ceci limite la hauteur de chute du liquide et la formation de gouttelettes de liquide pouvant être entrainées avec le gaz ventilé vers l'extérieur.

Le système fonctionne typiquement de la façon suivante : Lors du remplissage du réservoir, lorsque le niveau liquide atteint le niveau maximum de (fin de) remplissage, la pression augmente dans le réservoir, du fait d'une réduction importante ou d'un arrêt de la ventilation du ciel de gaz, déclenchant l'arrêt du remplissage. Cet arrêt n'est toutefois pas instantané. Par conséquent, un volume supplémentaire d'additif est encore introduit dans le réservoir, remplissant partiellement la capacité, via le passage de communication fluidique. Après arrêt complet du remplissage, une partie, ou de préférence la totalité de cet additif est alors drainé de la capacité vers le réservoir, pour former typiquement un volume unique d'additif, moins sensible au gel que plusieurs volumes séparés. L'obtention d'un volume unique évite d'avoir un volume mort d'additif non utilisable.

L'orifice d'évacuation de pression (et/ou de ventilation de gaz) permet de réaliser indirectement un drainage efficace, en évacuant du ciel du réservoir un volume de gaz sensiblement identique au volume d'additif drainé.

Typiquement, la section de passage du premier orifice, et/ou celle du second orifice, et/ou celle du troisième orifice est très inférieure (par exemple de 2 à 40 fois inférieure, ou de préférence de 3 à 30 fois inférieure) à celle du passage de communication fluidique, par exemple celle d'un orifice d'entrée de ce passage, ou le cas échéant un diamètre du conduit, de façon à ne pas empêcher le déclenchement de l'arrêt du remplissage par augmentation de pression lorsque le niveau dans le réservoir atteint le niveau de remplissage.

Le système comprend un embout de remplissage débouchant dans le réservoir, apte à un raccordement, externe au réservoir, à une tubulure de remplissage. Il comprend également un embout de ventilation, appartenant à la capacité, pour un raccordement externe à la capacité à une tubulure de ventilation.

Les connections entre les embouts et les tubulures peuvent être de tout type (par exemple connections filetées, à collier de serrage etc..), ou même peuvent être réalisées par soudage ou collage.

Le système peut comprendre également typiquement d'autres composants conventionnels, par exemple un clapet anti-retour disposé à l'intérieur de l'embout de remplissage.

Les tubulures de remplissage et de ventilation peuvent être considérées, selon l'invention, soit comme extérieures au système de stockage, soit par extension comme appartenant au système de stockage.

L'invention couvre également un système d'alimentation et de stockage d'additif comprenant:
- un système de stockage tel que décrit précédemment;
- une tubulure de remplissage du réservoir connectée à l'embout de remplissage.

L'invention couvre aussi un système d'alimentation et de stockage d'additif, et de ventilation de gaz comprenant:
- un système d'alimentation et de stockage d'additif tel que mentionné précédemment;
- une tubulure de ventilation connectée à un embout de ventilation appartenant à la capacité. Typiquement, la tubulure de ventilation relie la capacité à la tubulure de remplissage du réservoir en un point situé à l'extérieur du réservoir et de la capacité.

Dans le système de stockage selon l'invention les moyens permettant la détection d'un niveau maximum de remplissage du réservoir comprennent souvent, ou peuvent être formés par un orifice d'entrée d'un passage principal de communication fluidique entre le réservoir et la capacité, formant orifice principal de ventilation de gaz, et disposé au niveau de remplissage maximum, ce niveau de remplissage maximum étant situé à un niveau inférieur à un niveau intérieur maximum du réservoir.

Le réservoir, la capacité la tubulure de remplissage du réservoir et la tubulure de ventilation sont typiquement formés dans un ou plusieurs matériaux plastiques, c'est-à-dire en matériau(x) comprenant au moins un polymère en résine de synthèse, ces éléments étant produits par moulage, typiquement par injection.

Tous les types de matériau plastique apte à stocker l'additif peuvent convenir. Des matériaux plastiques convenant bien appartiennent à la catégorie des matériaux thermoplastiques.

Par matériau thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition convient. Les matériaux thermoplastiques de synthèse qui présentent une plage de température de fusion étalée sur au moins 10 degrés Celsius conviennent particulièrement bien. Comme exemple de tels matériaux, on trouve ceux qui présentent une poly-dispersion de leur masse moléculaire.

En particulier, on peut utiliser des polyoléfines, des polyesters thermoplastiques, des poly-cétones, des polyamides et leurs copolymères. Un mélange de polymères ou de copolymères peut aussi être utilisé, de même qu'un mélange de matériaux polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères mentionnés précédemment.

Un polymère souvent employé est le polyéthylène. D'excellents résultats ont été obtenus avec du polyéthylène haute densité (PEHD).

Le système est typiquement configuré pour, après remplissage du réservoir jusqu'au niveau de remplissage du réservoir, celui-ci déclenchant un arrêt non instantané du remplissage, permettre une réception et une rétention d'additif dans la capacité, avec remplissage partiel de cette capacité, et permettre ultérieurement un drainage au moins partiel de l'additif réceptionné de la capacité vers le réservoir.

L'invention concerne également un procédé de fabrication d'un système tel que mentionné ci-dessus dans lequel :
- on produit par moulage d'un premier matériau plastique, par exemple par injection, une première pièce comprenant la paroi complète du réservoir et une première partie de la paroi de la capacité qui n'est pas commune avec le réservoir,
- on produit par moulage, par exemple par injection, d'un second matériau plastique, de préférence identique au premier matériau plastique, une seconde pièce comprenant une seconde partie de la paroi de la capacité qui n'est pas commune avec le réservoir, complémentaire de ladite première partie de la paroi de la capacité, cette seconde partie de la paroi de la capacité comprenant un embout de remplissage et un embout de ventilation,
- on soude les première et seconde partie de la paroi de la capacité pour former la capacité.

L'invention sera mieux comprise en suivant la description des figures annexées dans lesquelles :
La figure 1 représente schématiquement un système de stockage selon l'invention selon le premier mode de réalisation, et également un système d'alimentation et de stockage d'additif, et de ventilation de gaz..
La figure 2 représente schématiquement un système de stockage selon l'invention selon le second mode de réalisation, dans une première configuration, et également un système d'alimentation et de stockage d'additif, et de ventilation de gaz.
La figure 3 représente schématiquement le système de la figure 2, dans une seconde configuration, et également un système d'alimentation et de stockage d'additif, et de ventilation de gaz..
La figure 4 représente schématiquement le système de la figure 2, dans une troisième configuration.
La figure 5 représente schématiquement un système de stockage selon l'invention selon une première variante du second mode de réalisation, et également un système d'alimentation et de stockage d'additif, et de ventilation de gaz.
La figure 6 représente schématiquement un système de stockage selon une seconde variante du second mode de réalisation.

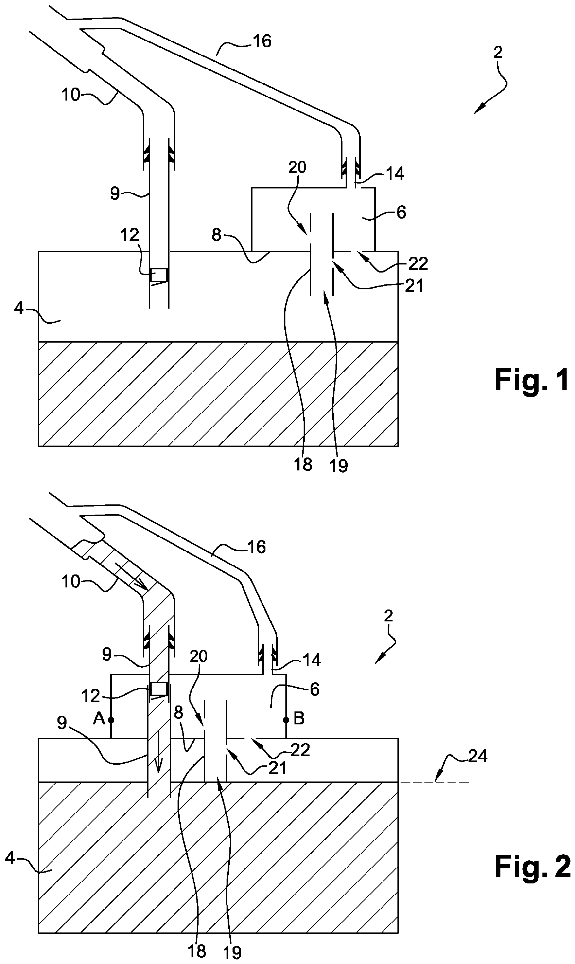

On se réfère maintenant aux figures 1 à 5, et en premier lieu à la figure 1, qui représente un système de stockage 2, comprenant un réservoir 4, adjacent à une capacité 6, le réservoir 4 et la capacité 6 comprenant une paroi commune 8.

Le système comprend également un embout de remplissage 9 apte à être reliée à une tubulure de remplissage 10, l'embout de remplissage 9 comprenant un clapet anti-retour 12.

Le système comprend également un embout de ventilation 14 apte à être reliée à une tubulure de ventilation 16 reliant la capacité 6 à la tubulure de remplissage 10 du réservoir en un point situé à l'extérieur du réservoir 4 et de la capacité 6.

L'ensemble global, non référencé, constitue un système d'alimentation et de stockage d'additif, et de ventilation de gaz.

Un conduit 18 traversant la paroi commune 8 forme un passage de communication fluidique 19 entre le réservoir 4 et la capacité 6.

Le système comprend également un premier orifice 20, de drainage disposé sur une première partie latérale du conduit 18, qui s'étend à l'intérieur de la capacité, et un deuxième orifice 21, d'évacuation de pression (et/ou de ventilation de gaz) disposé sur une seconde partie latérale du conduit 18, qui s'étend à l'intérieur du réservoir. Il comprend enfin un troisième orifice 22, de drainage disposé sur la paroi commune 8.

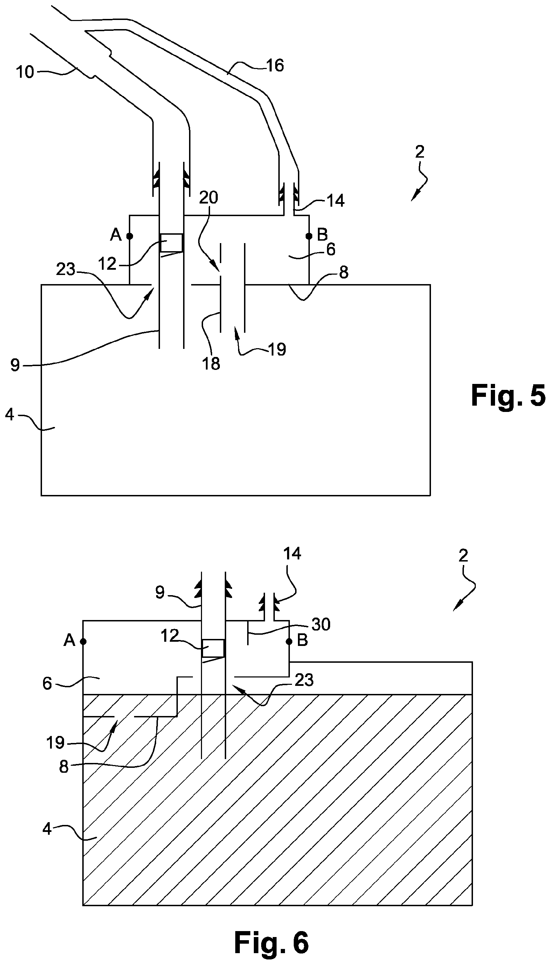

Le système de stockage selon l'invention comprend généralement uniquement les éléments précités, à l'exception des tubulures de remplissage 10 et de ventilation 16, comme sur le système représenté à la figure 6. Avec ces tubulures, on obtient un système complet d'alimentation et de stockage d'additif, et de ventilation de gaz.

La figure 2 représente, avec les mêmes références un exemple de réalisation selon le second mode de réalisation du système de stockage (et également du système de stockage et de remplissage d'additif, et de ventilation de gaz), dans une première configuration correspondant à un moment du remplissage du réservoir où le niveau de l'additif atteint le niveau de remplissage 24, déclenchant ainsi l'arrêt non instantané du remplissage. On peut constater que dans ce second mode de réalisation, l'embout de remplissage 9 traverse la capacité 6 avant de déboucher et s'étendre vers le bas à l'intérieur du réservoir 4. On comprendra que le terme embout de remplissage comprend un raccord pour connexion à une tubulure de remplissage, mais peut comprendre également un tronçon de conduit d'alimentation d'additif au cours du remplissage du réservoir (en une ou optionnellement plusieurs parties avec un ou plusieurs raccords internes).

Les parois de la capacité comprennent des points A et B et un embout de ventilation 14, la fonction de ces éléments étant explicitée ci-après.

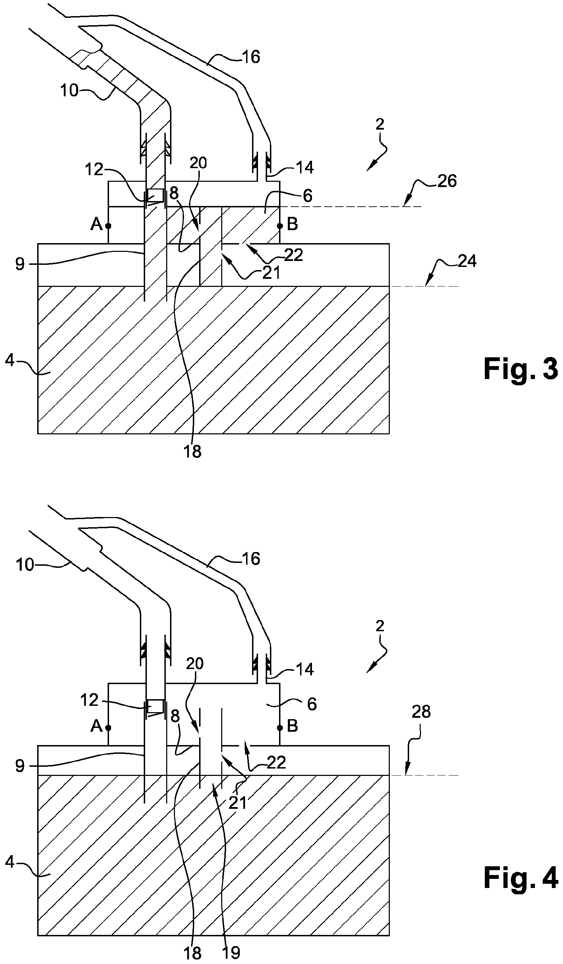

On peut voir à la figure 3 le système de la figure 2 dans une seconde configuration correspondant à un moment du remplissage du réservoir où l'arrêt de l'alimentation en additif devient effectif. On peut constater qu'un certain volume d'additif remplit partiellement la capacité, jusqu'au niveau 26 (ce niveau ne correspondant pas nécessairement à l'embouchure supérieure du conduit 18).

A partir de ce moment, le drainage gravitaire de la capacité 6 peut s'effectuer naturellement, le liquide s'écoulant dans le conduit 18 vers le réservoir via le premier orifice 20, de drainage, une partie du gaz compris dans le réservoir (ciel de gaz) étant évacuée par le second orifice 21. Du liquide peut également être drainé vers le réservoir par le troisième orifice 22, de drainage. Le troisième orifice 22 peut aussi évacuer un peu de gaz du ciel du réservoir, avec passage à contre-courant de gaz et de liquide.

L'utilisation de deux orifices distincts 20 et 21 pour le drainage et la ventilation permet de réaliser un drainage plus rapide, et d'éviter un passage complet à contre-courant de gaz et de liquide.

A l'issue du drainage, on obtient la configuration représentée à la figure 4, sensiblement la totalité de l'additif contenu dans la capacité 6 ayant été drainée vers le réservoir 4, qui atteint alors le niveau 28.

Pour fabriquer le système représenté aux figures 2 à 4, on réalise avantageusement, pour ce qui concerne le réservoir 4 et la capacité 6, une fabrication en deux parties de préférence par moulage de plastique par injection :
- on produit par moulage une première pièce intermédiaire comprenant la paroi complète du réservoir 4 et une première partie de la paroi de la capacité qui n'est pas commune avec le réservoir, comprenant les portions de cette capacité représentées sur les figures 2 à 4 en dessous des points A et B;
- on produit par moulage une seconde pièce intermédiaire comprenant une seconde partie de la paroi de la capacité qui n'est pas commune avec le réservoir, complémentaire de ladite première partie de la paroi de la capacité, cette seconde partie de la paroi de la capacité comprenant les portions de cette capacité représentées sur les figures 2 à 4 au dessus des points A et B, ainsi qu'une partie de l'embout de remplissage 9 qui est apte au raccordement avec une tubulure de remplissage 10, et l'embout de ventilation 14. Les éléments de la seconde pièce sont représentés en trait gras sur la figure 4.
- on soude alors les première et seconde partie de la paroi de la capacité pour former la capacité.

Ceci procure des avantages importants : En effet, l'embout de remplissage 9 comprend un raccord qui requiert une précision géométrique élevée, du fait qu'il s'agit d'une pièce de raccordement externe étanche avec la tubulure de remplissage 10. Réaliser ce raccord sur le réservoir lui-même conduirait à mettre en oeuvre un moule de grande dimension (celles du réservoir) de conception particulièrement complexe. Au contraire, la fabrication de cette partie à raccord de l'embout de remplissage solidairement avec la partie supérieure de la capacité, qui est typiquement une deuxième pièce moulée de relativement faibles dimensions, est beaucoup plus facile à réaliser au niveau de la conception du moule correspondant.

La figure 5 représente une première variante du second mode de réalisation du système représenté sur les figures 2 à 4. Dans cette première variante, l'embout de remplissage 9 traverse le quatrième orifice 23, déterminant un espace annulaire entre l'embout de remplissage 9 et un bord de cet orifice 23, apte à l'évacuation de pression, et/ou la ventilation de gaz, et/ou le drainage. Cette variante permet de simplifier le moule principal pour la fabrication du réservoir, le réservoir ne comprenant pas de partie terminale de l'embout de remplissage 9.

La figure 6 représente enfin partiellement une seconde variante de réalisation du second mode de réalisation du système, dans une configuration après drainage. Dans cette seconde variante, le passage de communication fluidique 19 est un simple orifice de relativement grand diamètre, et ne comprend pas de conduit tel que le conduit 18 représenté sur les figures précédentes. Un baffle 30 permet d'éviter les entrainements liquides dans la tubulure de ventilation lorsque l'additif entre dans la capacité 6.

Dans cette variante, c'est le passage de communication fluidique 19 qui remplit la fonction d'orifice de drainage. Après drainage, le niveau liquide de l'additif dans la capacité 6 et le réservoir 4 est identique, et l'additif forme toujours un volume unique, sans volume mort. Par contre, le drainage n'est pas total, et la capacité 6 contient une partie de l'additif après drainage, et contribue donc, de façon limitée, au stockage de l'additif. La conception du moule pour la fabrication du réservoir est encore plus simple dans cette variante, car le réservoir ne comprend aucune partie tubulaire (aucun conduit).

L'invention n'est pas limitée aux modes de réalisation présentés et d'autres modes de réalisation apparaîtront clairement à l'homme du métier. Il est notamment possible d'utiliser également une tubulure de ventilation annexe du réservoir, par exemple reliant une paroi du réservoir qui ne fait pas partie de la paroi commune 8 à une partie amont de la tubulure de remplissage 10, pour réaliser un équilibrage de pression du réservoir avec la pression ambiante, éventuellement à travers un élément poreux pour limiter la respiration du réservoir.

On peut également utiliser tout autre élément ou dispositif connu de l'état de la technique qui est compatible avec l'invention.

## Revendications

1. Système (2) de stockage d'un additif liquide destiné à être injecté dans des gaz d'échappement d'un moteur à combustion interne d'un véhicule, comprenant:
un réservoir (4) de stockage d'additif comprenant des moyens permettant de fixer un niveau maximum de remplissage du réservoir, un embout de remplissage (9) débouchant dans le réservoir et apte à un raccordement à une tubulure de remplissage (10) du réservoir,
**caractérisé en ce que** le système comprend:
une capacité (6) de rétention d'additif en communication fluidique avec le réservoir (4), ladite capacité étant configurée pour retenir de l'additif provenant du réservoir,
un embout de ventilation (14) apte à être relié à une tubulure de ventilation (16) reliant la capacité (6) à la tubulure de remplissage (10) du réservoir en un point situé à l'extérieur du réservoir (4) et de la capacité (6),
et **en ce que** la capacité (6) de rétention d'additif et le réservoir (4) sont adjacents et comprennent au moins une paroi commune (8).

2. Système (2) selon la revendication 1, dans lequel la paroi commune (8) comprend un passage (19) configuré pour mettre la capacité (6) en communication fluidique avec le réservoir (4).

3. Système (2) selon la revendication 2, **caractérisé en ce que** ledit passage (19) est formé par un conduit (18) traversant la paroi commune (8).

4. Système (2) selon la revendication 3, dans lequel le conduit (18) comprend une première partie s'étendant à l'intérieur de la capacité, ladite première partie du conduit comprenant au moins un premier orifice (20), de drainage, et une deuxième partie s'étendant à l'intérieur du réservoir (4) jusqu'au niveau maximum de remplissage du réservoir (4).

5. Système (2) selon la revendication 4, dans lequel ladite seconde partie du conduit comprend au moins un deuxième orifice (21), d'évacuation de pression.

6. Système (2) selon l'une quelconque des revendications 1 à 5, dans lequel l'embout de remplissage (9) traverse la capacité (6) puis débouche dans le réservoir (4), et de préférence s'étend vers le bas à l'intérieur du réservoir (4), l'embout de remplissage du réservoir étant de préférence venu de matière avec une paroi de la capacité (6).

7. Système (2) selon la revendication 6, dans lequel l'embout de remplissage (9) du réservoir passe dans un quatrième orifice (23) aménagé dans la paroi commune, délimitant entre cet embout de remplissage et un bord de ce quatrième orifice (23) un espace de communication fluidique entre le réservoir et la capacité.

8. Système (2) selon l'une quelconque des revendications 1 à 7, dans lequel le réservoir (4) et la capacité (6) sont formés dans un ou plusieurs matériaux plastiques, et sont produits par moulage par injection.

9. Système (2) selon l'une quelconque des revendications 1 à 8, configuré pour, après remplissage du réservoir jusqu'au niveau maximum (24) de remplissage du réservoir (4), celui-ci déclenchant un arrêt non instantané du remplissage, permettre une réception et une rétention d'additif dans la capacité (6), avec remplissage partiel de cette capacité, et permettre ultérieurement un drainage au moins partiel de la capacité (6) vers le réservoir (4).

10. Procédé de fabrication d'un système de stockage d'additif (2) selon l'une des revendications 6 et 7, dans lequel :
- on produit par moulage d'un premier matériau plastique, par exemple par injection, une première pièce comprenant la paroi complète du réservoir (4) et une première partie de la paroi de la capacité (6) qui n'est pas commune avec le réservoir (4) ;
- on produit par moulage, par exemple par injection, d'un second matériau plastique, de préférence identique au premier matériau plastique, une seconde pièce comprenant une seconde partie de la paroi de la capacité (6) qui n'est pas commune avec le réservoir (4), complémentaire de ladite première partie de la paroi de la capacité (6), cette seconde partie de la paroi de la capacité (6) comprenant une partie au moins de l'embout de remplissage (9) qui est apte au raccordement avec une tubulure de remplissage (10), et un embout de ventilation (14);
- on soude les première et seconde partie de la paroi de la capacité (6) pour former la capacité.

## Patentansprüche

1. System (2) zum Bevorraten eines flüssigen Zusatzstoffes zum Einspritzen in die Abgase eines Verbrennungsmotors eines Fahrzeugs, umfassend:
einen Tank (4) zum Bevorraten des Zusatzstoffes, der Mittel umfasst, die das Festlegen eines maximalen Füllstandes des Tanks gestatten,
einen Einfüllstutzen (9), der in dem Tank ausmündet und für einen Anschluss an ein Einfüllrohr (10) des Tanks eingerichtet ist,
**dadurch gekennzeichnet, dass** das System Folgendes umfasst:
einen Zusatzstoff-Rückhaltespeicher (6) in Strömungsverbindung mit dem Tank (4), wobei der Speicher zum Zurückhalten des aus dem Tank stammenden Zusatzstoffs ausgebildet ist,
eine Lüfterstutzen (14), der eingerichtet ist für die Verbindung mit einem Lüfterrohr (16), das den Speicher (6) mit dem Einfüllrohr (10) des Tanks in einem Punkt verbindet, der sich außerhalb des Tanks (4) und des Speichers (6) befindet,
und dass der Zusatzstoff-Rückhaltespeicher (6) und der Tank (4) aneinander angrenzen und mindestens eine gemeinsame Wand (8) umfassen.

2. System (2) nach Anspruch 1, wobei die gemeinsame Wand (8) einen Durchlass (19) umfasst, der ausgebildet ist, um den Speicher (6) mit dem Tank (4) in Strömungsverbindung zu setzen.

3. System (2) nach Anspruch 2, **dadurch gekennzeichnet, dass** der Durchlass (19) von einer Rohrleitung (18) gebildet ist, welche die gemeinsame Wand (8) durchquert.

4. System (2) nach Anspruch 3, wobei die Rohrleitung (18) einen ersten Teil umfasst, der sich in das Innere des Speichers erstreckt, wobei der erste Teil der Rohrleitung mindestens eine erste Öffnung (20), zum Ableiten, umfasst, und einen zweiten Teil umfasst, der sich im Inneren des Tanks (4) bis zu dem maximalen Füllstand des Tanks (4) erstreckt.

5. System (2) nach Anspruch 4, wobei der zweite Teil der Rohrleitung mindestens eine zweite Öffnung (21), zum Druckablassen, umfasst.

6. System (2) nach einem der Ansprüche 1 bis 5, wobei der Einfüllstutzen (9) den Speicher (6) durchquert und dann in dem Tank (4) ausmündet und sich vorzugsweise nach unten in das Innere des Tanks (4) erstreckt, wobei der Einfüllstutzen des Tanks vorzugsweise einstückig mit einer Wand des Speichers (6) ausgebildet ist.

7. System (2) nach Anspruch 6, wobei der Einfüllstutzen (9) des Tanks in eine vierte Öffnung (23) eintritt, die in der gemeinsamen Wand vorgesehen ist, wobei er zwischen diesem Einfüllstutzen und einem Rand dieser vierten Öffnung (23) einen Raum für die Strömungsverbindung zwischen dem Tank und dem Speicher begrenzt.

8. System (2) nach einem der Ansprüche 1 bis 7, wobei der Tank (4) und der Speicher (6) aus einem oder mehreren Kunststoffen gebildet sind und durch Spritzgießen hergestellt sind.

9. System (2) nach einem der Ansprüche 1 bis 8, das dafür ausgebildet ist, nach Befüllen des Tanks bis zu dem maximalen Füllstand (24) des Tanks (4), wobei dieser ein nicht kurzzeitiges Anhalten der Befüllung auslöst, eine Aufnahme und einen Rückhalt von Zusatzstoff in dem Speicher (6), mit teilweiser Befüllung dieses Speichers, zu gestatten und später eine mindestens teilweise Ableitung von dem Speicher (6) zu dem Tank (4) zu gestatten.

10. Verfahren zum Herstellen eines Systems (2) zum Bevorraten eines Zusatzstoffes, nach einem der Ansprüche 6 und 7, wobei:
- durch Gießen, zum Beispiel durch Spritzgießen, aus einem ersten Kunststoff ein erstes Teil hergestellt wird, das die vollständige Wand des Tanks (4) und eines ersten Teil der Wand des Speichers (6), die nicht mit dem Tank (4) gemeinsam ist, umfasst;
- durch Gießen, zum Beispiel durch Spritzgießen, aus einem zweiten Kunststoff, der vorzugsweise mit dem ersten Kunststoff identisch ist, ein zweites Teil hergestellt wird, das einen zweiten Teil der Wand des Speichers (6) umfasst, das nicht mit dem Tank (4) gemeinsam ist und zu dem ersten Teil der Wand des Speichers (6) komplementär ist, wobei dieser zweite Teil der Wand des Speichers (6) einen Teil mindestens des Einfüllstutzens (9), der für den Anschluss an ein Einfüllrohr (10) vorgesehen ist, und einen Lüfterstutzen (14) umfasst;
- der erste und zweite Teil der Wand des Speichers (6) verschweißt werden, um den Speicher zu bilden.

## Claims

1. System (2) for storing a liquid additive intended to be injected into the exhaust gases from an internal combustion engine of a vehicle, comprising:
an additive storage tank (4) comprising means for setting a maximum filling level of the tank,
a filler mouthpiece (9) discharging into the tank and adapted for connection to a filler tube (10) of the tank,
an additive retention capacity (6) which fluidically communicates with the tank (4), said capacity being designed so as to retain additive coming from the tank,
**characterized in that** the system comprises:
a ventilation mouthpiece (14) adapted for attachment to a ventilation tube (16) connecting the capacity (6) to the filler tube (10) of the tank at a point situated outside the tank (4) and the capacity (6),
and **in that** the additive retention capacity (6) and the tank (4) are adjacent and comprise at least one common wall (8).

2. System (2) according to Claim 1, in which the common wall (8) comprises a passage (19) designed to place the capacity (6) in fluidic communication with the tank (4).

3. System (2) according to Claim 2, **characterized in that** said passage (19) is formed by a duct (18) passing through the common wall (8).

4. System (2) according to Claim 3, in which the duct (18) comprises a first part extending into the interior of the capacity, said first part of the duct comprising at least a first drainage orifice (20), and a second part extending into the interior of the tank (4) as far as the maximum level of filling of the tank (4).

5. System (2) according to Claim 4, in which said second part of the duct comprises at least a second orifice (21), for the release of pressure.

6. System (2) according to any of Claims 1 to 5, in which the filler mouthpiece (9) passes through the capacity (6) and then discharges into the tank (4), and preferably extends towards the bottom in the interior of the tank (4), the filler mouthpiece of the tank preferably being made from the same material as a wall of the capacity (6).

7. System (2) according to Claim 6, in which the filler mouthpiece (9) of the tank passes into a fourth orifice (23) provided in the common wall, thereby delimiting between said filler mouthpiece and an edge of said fourth orifice (23) a space for fluidic communication between the tank and the capacity.

8. System (2) according to any of Claims 1 to 7, in which the tank (4) and the capacity (6) are formed in one or a plurality of plastic materials, and are produced by injection moulding.

9. System (2) according to any of Claims 1 to 8, designed, after filling of the tank up to the maximum filling level (24) of the tank (4), the latter triggering the non-instantaneous interruption of the filling, so as to permit the reception and the retention of additive in the capacity (6), with partial filling of said capacity, and subsequently so as to permit the at least partial drainage of the capacity (6) into the tank (4).

10. Method for manufacturing an additive storage system (2) according to one of Claims 6 and 7, in which:
- moulding of a first plastic material, for example by injection, is used to produce a first component comprising the complete wall of the tank (4) and a first part of the wall of the capacity (6) which is not common with the tank (4);
- moulding, for example by injection, of a second plastic material, preferably identical to the first plastic material, is used to produce a second component comprising a second part of the wall of the capacity (6) which is not common with the tank (4), complementary to said first part of the wall of the capacity (6), said second part of the wall of the capacity (6) comprising one part at least of the filler mouthpiece (9) which is adapted for connection to a filler tube (10), and a ventilation mouthpiece (14);
- the first and second parts of the wall of the capacity (6) are welded in order to form the capacity.
